(19) Europäisches Patentamt / European Patent Office / Office européen des brevets

(11) **EP 3 259 732 B1**

(12) **EUROPEAN PATENT SPECIFICATION**

(45) Date of publication and mention
of the grant of the patent:
**14.11.2018 Bulletin 2018/46**

(21) Application number: **16700989.3**

(22) Date of filing: **19.01.2016**

(51) Int Cl.:
*G06T 5/00* (2006.01)     *G06T 7/00* (2017.01)

(86) International application number:
**PCT/EP2016/050966**

(87) International publication number:
**WO 2016/131587 (25.08.2016 Gazette 2016/34)**

(54) **METHOD AND DEVICE FOR STABILIZATION OF A SURROUND VIEW IMAGE**

VERFAHREN UND VORRICHTUNG ZUR STABILISIERUNG EINES SURROUND-BLICKBILDES

PROCÉDÉ ET DISPOSITIF D'UNE STABILISATION D'UNE IMAGE PANORAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2015 EP 15155161**

(43) Date of publication of application:
**27.12.2017 Bulletin 2017/52**

(73) Proprietor: **Application Solutions
(Electronics and Vision) Ltd.
Lewes Sussex BN7 2AQ (GB)**

(72) Inventors:
• **GUERREIRO, Rui**
**Brighton BN1 5PP (GB)**
• **PANAKOS, Andreas**
**Hove BN3 3YU (GB)**
• **SILVA, Carlos**
**Eastbourne BN21 1EL (GB)**
• **YADAV, Dev**
**Lewes BN7 2SA (GB)**

(74) Representative: **Bobbert, Christiana
Conti Temic microelectronic GmbH
Intellectual Property
Sieboldstrasse 19
90411 Nürnberg (DE)**

(56) References cited:
**EP-A1- 2 091 020**

• **CHANG S-L ET AL: "Video Stabilization for a Camcorder Mounted on a Moving Vehicle", IEEE TRANSACTIONS ON VEHICULAR TECHNOLOGY, IEEE SERVICE CENTER, PISCATAWAY, NJ, US, vol. 53, no. 6, 1 November 2004 (2004-11-01), pages 1636-1648, XP011122454, ISSN: 0018-9545, DOI: 10.1109/TVT.2004.836923**
• **XIANGHUA YING ET AL: "Fisheye Lenses Calibration Using Straight-Line Spherical Perspective Projection Constraint", 1 January 2005 (2005-01-01), COMPUTER VISION - ACCV 2006 LECTURE NOTES IN COMPUTER SCIENCE;;LNCS, SPRINGER, BERLIN, DE, PAGE(S) 61 - 70, XP019027496, ISBN: 978-3-540-31244-4 page 62 - page 65**
• **BARNARD S T: "Interpreting Perspective Images", ARTIFICIAL INTELLIGENCE, ELSEVIER SCIENCE PUBLISHER B.V., AMSTERDAM, NL, vol. 21, no. 4, 1 November 1983 (1983-11-01), pages 435-462, XP002717906, ISSN: 0004-3702, DOI: 10.1016/S0004-3702(83)80021-6**
• **Geoffrey Vincent: "Apports des caméras Fish-eye (hypergones) au positionnement en milieu urbain. - Catalogue des mémoires de projets de fin d'études", , 30 October 2013 (2013-10-30), pages 1-1, XP055203554, Retrieved from the Internet: URL:http://eprints2.insa-strasbourg.fr/155 3/ [retrieved on 2015-07-20]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The current specification relates to driver assistance systems, and in particular to driver assistance system that an input data stream of one or more cameras.

Advanced driver assistance systems (ADAS) are systems developed to automate and enhance vehicle systems for safety and better driving. Many driver assistance systems use information about a car's position, orientation and motion state to assist the driver in various ways. This information may even be used to drive the vehicle autonomously.

Among others, visual odometry can be used to determine a car's position. In a system for visual odometry, cameras are used to record input images and image corrections are applied. Features are detected, the features are matched across image frames and an optical flow field is constructed, for example by using a correlation to establish a correspondence between two images, by feature extraction and correlation or by constructing an optical flow field using the Lucas-Kanade method. Tracking errors are detected, the corresponding out-liers are removed and the camera motion is estimated from the optical flow, for example using a Kalman filter or by minimizing a cost function that is based on geometric properties of the features.

The patent application US 2010/0295948 discloses a method and device for camera calibration. Parameters of the camera, such as the tilting angle and pan angle, are calibrated using detected parallel lines and corresponding vanishing points.

The research article "Vanishing Point Detection by Clustering on the Normalized Unit Sphere" by Qiang He and Chee-Hung Henry Chu in International Journal of Computer applications, Volume 65, No. 10, March 2013, pages 22 - 28 describes the detection of vanishing points using a projection onto a normalized unit sphere.

The document "Video Stabilization for a Camcorder Mounted on a Moving Vehicle", IEEE Transactions on Vehicular Technology, IEEE Service Center, Picataway, NJ, US, vol. 53, no. 6 by Chang S.-L. et al. discloses using a sequence of camcorder images to derive two rotation parameters $\beta$, $\gamma$ from a motion of a road vanishing point, to derive a translation parameter $T_x$, $\alpha$, $\beta$, $\gamma$ with a Kalman filter.

The document "Fisheye Lenses Calibration Using Straight-Line Spherical Perspective Projection Constraint" from Xianghua Ying et al. discloses the use of fisheye lenses to enlarge the field of view of a conventional camera.

The document "Interpreting Perspective Images" from Stephen T. Barnard discloses a method for vanishing point determination, wherein the vanishing point is found by projecting lines on the unit sphere.

The following references [1] to [3] relate to the subject matter of the present specification.

[1] Filippo Vella, Alfio Castorina, Massimo Mancuso, Giuseppe Messina, "Digital Image Stabilization by Adaptive Block Motion Vectors Filtering", IEEE Trans. Consumer Electronics, 2002.

[2] Joseph Geumlek, Ling Han Meng, "Contextual Point Matching for Video Stabilization: Sea Shell Sketch". University of California Irvine, 2012.

[3] Yanhao Zhang, Hongxun Yao, Pengfei Xu, Rongrong Ji, Xiaoshuai Sun, Xianming Liu, "Video stabilization based on saliency driven SIFT matching and discriminative RANSAC", in: Proceedings of the Third International Conference on Internet Multimedia Computing andService, 2011.

Vella et al.[1] describes a motion estimation method based on block motion vectors. This method is robust but may introduce errors, such as blocks appearing in the final image.

Geumlek et al.[2] applies a contextual shape matching algorithm. This method is computationally-intensive but it out-performs methods which only consider local features in cases where the shapes involved have high degrees of self-similarity, or change in appearance significantly between frames while maintaining a similar overall shape.

Zhang et al. [3] use scale invariant feature transform (SIFT) matching and discriminative RANSAC. A Kalman filter is then applied to complete the motion smoothing task.

In a first aspect, the current specification discloses a method for image stabilization of an image sequence from one or more cameras of a car, in particular of surround view or 360° view images. By way of example, a surround view image can be obtained from the combined data of a front view camera, a right side view camera, a left side view camera and a rear view camera.

Images of the surroundings of a car are acquired from one or more cameras of the car. Each camera supplies a data stream of consecutive images which are merged to a single sequence of consecutive images. The projection to the ground plane is obtained by merging the respective top down views into a single projection image.

An image distortion function $h^{-1}(x")$ is applied to the image to obtain a corrected image. In the corrected image, lens distortions are reduced and lines, which correspond to straight object lines and which are curved due to lens distortions, are straightened. In particular, a distortion correction is provided to remove barrel shaped lens distortions, such as those caused by a fish-eye objective.

At least two corresponding straight lines are detected in the corrected image, which are parallel or essentially parallel to each other in the surroundings of the vehicle.

A position of a vanishing point of the at least two parallel lines on a unit sphere is computed and a motion of the vanishing point on the unit sphere is tracked. In a particular embodiment, the motion of the vanishing point is tracked with a prediction filter, such as a Kalman filter. In a further embodiment, an input of the prediction filter comprises a value of a motion sensor or a position sensor. For example, a position sensor may be provided by a gyrocompass, by a liquid level sensor or by another type of gravity sensor which indicates an inclination to a vertical direction.

Vanishing points are robust features and they can easily be calculated using the unit sphere. The top view projection for each image is similar to the normal projection model thus the Jacobian matrix can easily be obtained and used to project a Kalman filter for each image.

A change in orientation of the one or more cameras is derived from the tracked motion of the vanishing point and a scaling of the recorded images is computed using the derived change in orientation of the one or more cameras. According to one embodiment, image points are identified as object points at a ground level and are projected to the ground level using an affine projection. A scaling factor is then computed using the distance to the ground level according to the affine projection and the derived camera orientations.

The computation of the scaling factor may furthermore comprise using pre-determined orientation and position data of the cameras, such as a height of a camera above ground level and an orientation of the camera. By way of example, the predetermined orientation and position of the cameras may be obtained as input data from the cameras, pre-stored values or by a camera calibration using a predetermined set-up of the car's surroundings. For example, the pre-determined setup may comprise a floor with a measuring grid.

In particular embodiments, the distortion correction to the images is based on a lense model of a convex lens, such as a polynomial fish-eye model, or on a Hough transform.

In a particular embodiment, the vanishing point of the detected corresponding parallel lines is derived by computing a projection of image points of the detected lines on a unit sphere and by computing the intersection of the corresponding great circles.

In a particular embodiment, the image scaling comprises deriving a true distance between a camera of the surround view system and a ground surface, computing a scaling factor for an image pixel based on the derived true distance between the camera and an object point on the ground surface.

In a further embodiment, the tracking of the vanishing point comprises a tracking with a prediction filter. In a particular embodiment, the tracking filter comprising a Kalman filter. According to a further embodiment, input values of the prediction further comprise an input from a motion sensor s such as an acceleration sensor of the car and/or from an orientation sensor such as a gyro compass, a liquid level sensor or a gravity sensor.

In a further aspect, the current specification discloses a computer program product, such as an executable file on a data carrier or in a persistent or volatile computer memory for executing the aforementioned method. In particular, the computer program product refers to an executable file in a hardware component, which is suitable for use in automotive electronics.

According to a further aspect, the current specification refers to an image correction system for a motor vehicle for compensating a change in orientation of one or more cameras, which are mounted to the motor vehicle.

The computation unit comprises an input connection for receiving a stream of image data. The input data comprises consecutive camera images from at least one camera, which are taken at consecutive times.

The computation unit comprises an input connection for receiving images of the surroundings of a car from one or more cameras of the car and a processing unit that is operative apply a lens distortion correction to obtain a corrected image and to detect at least two corresponding straight lines in the corrected image.

Furthermore, the processing unit is operative to derive a position of a vanishing point of the at least two corresponding straight lines on a unit sphere, track a motion of the vanishing point on the unit sphere and to derive a change in orientation of the one or more cameras from the tracked motion of the vanishing point. The processing unit derives a scaling of the recorded images using the derived change in orientation and a projection of the recorded camera image, or an image derived from the recorded image, to a ground plane.

According to one particular example, the camera is mounted at a right angle to ground level at a distance d to the ground level, a view angle of the camera below the horizontal is $\beta_1$. and a view angle of the camera above the horizontal is $\beta_2$. For this particular geometrical arrangement, the camera covers a stretch of the street of length

$$l = d * \left( \frac{\sin(90° - \beta_1)}{\sin(90° - \vartheta + \beta_1)} - \frac{\sin(90° + \beta_2)}{\sin(90° - \vartheta - \beta_2)} \right),$$

which can be derived from the law of sines for triangles.

A similar computation yields the equivalent length of an image pixel as a function of the distance of the pixel to the optical axis of the lens, the camera height, and the camera inclination for a pinhole-camera. According to the present specification, a lens model is used and a local magnification factor is derived according to the lens model, in particular according to a fish-eye lens model. The equivalent length of a pixel in world coordinates is computed according to the lens model under the assumption that the pixel corresponds to an area of the ground plane.

According to a further aspect, the present specification discloses a motor vehicle, such as a car, a passenger car, a minibus, a utility vehicle, a pickup, a minivan, or a caravan with an image correction system. One or more cameras of the motor vehicle are connected to the computation unit of the image correction system.

During operation, the cameras deliver image data to the computation unit. According to further embodiments, there are different operation modi according to an operation state of the car, for example according to a selected gear. By way of example, the image frequency may be reduced when the vehicle is moving slowly, such as in a parking mode or the camera orientation may be adjusted automatically according to a motion state of the vehicle.

A method for image stabilization according to the present specification relates to a surround view system, which provides a perspective projection that is similar to the view from a virtual camera above the vehicle which points to the ground. Among others, the image stabilization method provides a stabilization of the ground plane, which avoids errors that are introduced by any motion of anyone of the cameras of the surround view system, such pan and tilt motions. Thereby, a perceptible difference in the merging of the areas can be avoided and the projection can be made consistent.

According to a further embodiment, images of the surroundings of a car from one or more cameras of the car and image points of the recorded images are projected to a unit sphere, wherein the projection comprises applying a lens distortion correction.

At least one vanishing point from the projected image points on the unit sphere is calculated and the motion of the at least one vanishing point is tracked for each of one or more cameras. The motion of at the least one vanishing point is used to calculate a corrected projection to a ground plane. In particular, the tracking can be performed using a prediction filter, such as the Kalman filter.

In one embodiment, the method comprises deriving, for each of the one or more cameras, a position deviation of the position of an image plane from the motion of the vanishing point and filtering the position deviation over time. In one embodiment, the filtering comprises filtering with a Kalman filter.

In particular, the method may comprise detecting edges in the recorded images, for example by using a Hough transform, and projecting image points of the detected edges onto the unit sphere.

According to one embodiment, the distortion correction comprises applying a lens distortion correction which is based on a polynomial fish-eye model.

According to a further embodiment, the recalculation of the corrected projection to a ground plane comprises deriving a scaling of the recorded images using the filtered position.

In a further embodiment, the method comprises applying a lens distortion correction to obtain a corrected image, detecting at least two corresponding straight lines in a corrected image, deriving a position of a vanishing point of the at least two parallel lines on a unit sphere and tracking a motion of the vanishing point on the unit sphere.

A vanishing point may also be determined by detecting a clustering of line intersections on the unit sphere. A change in orientation of the one or more cameras is derived from the tracked motion of the vanishing point, and a scaling of the recorded images is calculated using the derived change in orientation.

According to a further embodiment, the method comprises deriving a true distance between a camera of the surround view system and a ground surface and computing a scaling factor for an image pixel based on the derived true distance between the camera and the ground surface.

According to a further embodiment the vanishing point of the detected parallel lines is derived by projecting the detected lines on a unit sphere and determining the intersection of corresponding great circles.

In a particular embodiment, the tracking of the vanishing point comprises a tracking with a prediction filter, such as the Kalman filter. In a further embodiment, input values of the prediction further comprise an input from a motion sensor of the vehicle.

Furthermore, the present specification discloses a computer program product for executing the aforementioned method.

Moreover, the present specification discloses an image correction system for a motor vehicle comprising a computation unit with an input connection for receiving consecutive camera images from one or more cameras. The computation unit comprises an input connection for receiving images of the surroundings of a car from one or more cameras of the car and a processing unit.

The processing unit is operative to project image points of the recorded images to a unit sphere, wherein the projection comprises applying a lens distortion correction, to calculate, for each of the one or more cameras, vanishing points from the projected image points on the unit sphere and to track a motion of the vanishing points. Furthermore, the processing unit is operative to calculate, for each of the one or more cameras, an error in the position of an image plane and filtering the position over time and to use the filtered position to calculate a corrected projection to a ground plane.

According to a further embodiment, the processing unit is operative to apply a lens distortion correction to obtain a corrected image, detect at least two corresponding straight lines in the corrected image, derive a position of a vanishing point of the at least two corresponding straight lines on a unit sphere, and track a motion of the vanishing point on the unit sphere. Furthermore, the processing unit is operative to derive a change in orientation of the one or more cameras from the tracked motion of the vanishing point, and to derive a scaling of the recorded images using the derived change in orientation.

Furthermore, the present specification discloses a motor vehicle with the aforementioned image correction system, wherein one or more cameras of the motor vehicle are connected to the computation unit of the image correction system.

The application is now explained in further detail with respect to the following Figures in which

Fig. 1   shows a car with a surround view system,
Fig. 2   illustrates a projection to a ground plane of an image point recorded with the surround view system of Fig. 1,
Fig. 3   illustrates in further detail the ground plane projection of Fig. 3,
Fig. 4   illustrates in further detail the ground plane projection of Fig. 3,
Fig. 5   shows a determination of a vanishing point,
Fig. 6   shows a determination of a vanishing point in further detail,
Fig. 7   shows a motion of the vanishing point in spherical coordinates,
Fig. 8   shows a procedure for deriving an image point of a corrected image, and
Fig. 9   shows a procedure for an image stabilization according to the present specification.

In the following description, details are provided to describe the embodiments of the present specification. It shall be apparent to one skilled in the art, however, that the embodiments may be practised without such details.

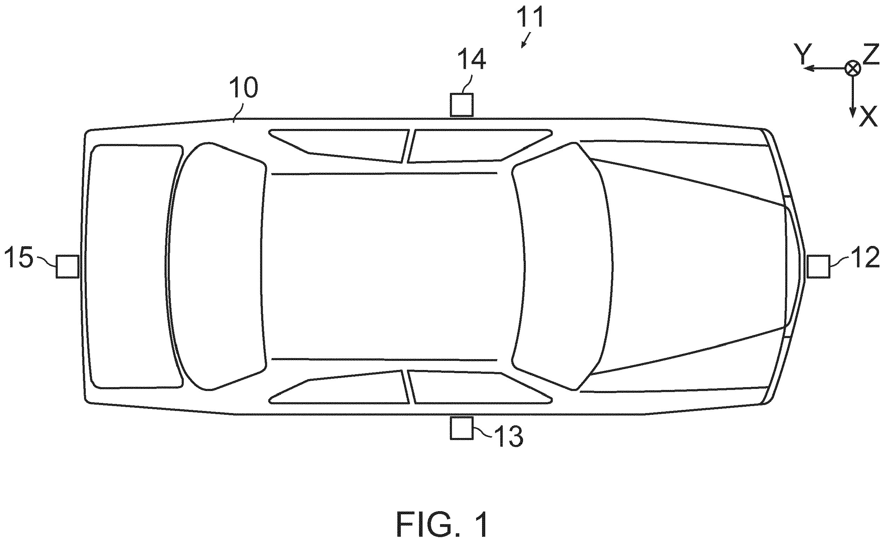

Figure 1 shows a car 10 with a surround view system 11. The surround view system 11 comprises a front view camera 12, a right side view camera 13, a left side view camera 14 and a rear view camera 15. The cameras 11 - 14 are connected to a CPU of a controller, which is not shown in Fig. 1. The controller is connected to further sensors and units, such as a velocity sensor, a steering angle sensor, a GPS unit, and acceleration and orientation sensors.

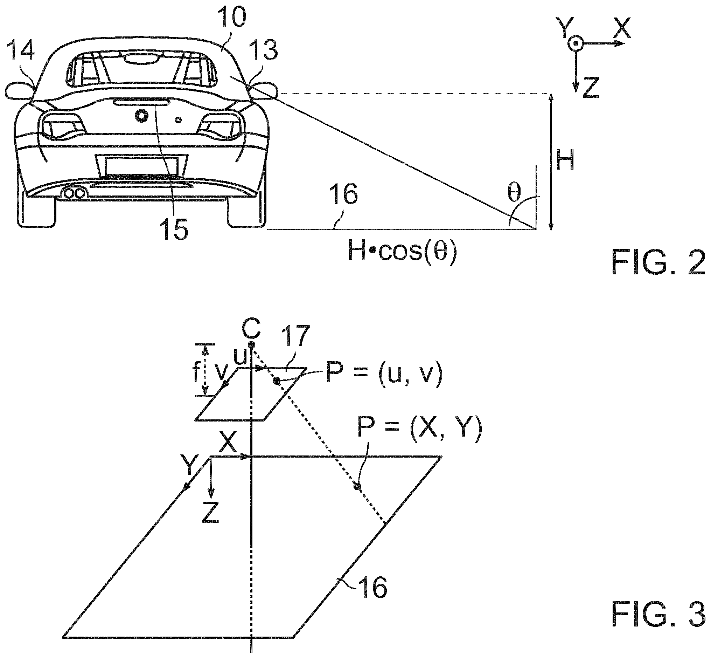

Figs. 2, 3 and 4 show a projection to a ground plane 16. Fig. 2 shows a projection of an image point to a ground plane 16. An angle of inclination $\theta$ relative to the vertical can be estimated from a location of the image point on the image sensor of the right side view camera 13. If the image point corresponds to a feature of the road the location of the corresponding object point is the projection of the image point onto the ground plane.

In the example of Fig. 3, the camera 13 has an elevation H above the ground plane. Consequently, the correspond object point is located at a distance $H*\cos(\theta)$ from the right side of the car 10. If an image point corresponds an object point on the ground plane, a projection of the image point to the ground plane represents the real position of an object point in the surroundings. An angle $\theta$ of incidence is derived from a location of the image point on the camera sensor. A location Y of the projection is then derived using the height H of the camera sensor above street level as $Y = H * \cos(\theta)$.

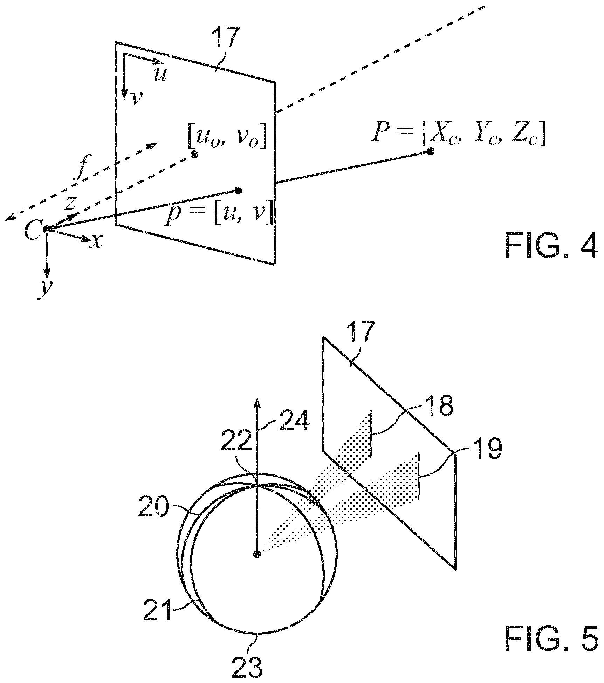

Fig. 3 shows an isometric view of the affine projection of Fig. 2. In Fig. 4, a point in a view port plane 17 is denoted by $p = (u, v)$ and a corresponding point in the ground plane 16 is denoted by $P = (X, Y)$. A distance between the view port plane 17 and a projection centre C is denoted by the letter "f".

Fig. 4 shows an enlarged section of Fig. 3 in which a central image point $p_0$ is denoted by the coordinates $(u_0, v_0)$ an image point p is denoted by coordinates $(u, v)$ and a projected image point P on the ground plane is denoted by coordinates (Xc, Yc, Zc).

In a further aspect, Fig. 4 can be seen as a projection of the world point (Xc, Yc, Zc) to an image plane. The 3D point (Xc, Yc, Zc) with the word coordinates Xc, Yc, Zc can be mapped to an image point according to

$$u = f\frac{Y_c}{Z_c} + u_0$$

$$v = f\frac{X_c}{Z_c} + v_0$$

A camera ray is defined as a normal vector. Thus, a mapping to a camera ray corresponds to a mapping to a point on the surface of a unit sphere. It can be computed by normalizing the vector (u, v, 1).

Fig. 5 shows a determination of a vanishing point. A virtual image plane 17, in which line distortions of a camera sensor image have been compensated by a distortion correction, comprises a first vertical line 18 and a second vertical line 19.

When the lines 18, 19 are projected onto a unit sphere 23 by using a central projection for which the center of projection is at the center of the unit sphere 23, the projections of the parallel lines 18, 19 form segments of respective great circles 20, 21.

According to the present specification, a Jacobian Matrix, which is used in an extended Kalman filter, such as the state matrix and the prediction matrix, can be derived from a normalized projection camera model according to the present specification. The Jacobian matrices can be easier to calculate by using a constraint on the radius according to the present specification.

The intersections of the great circles 20, 21 are the vanishing points of the parallel lines 18, 19. In Fig. 5 one intersection 22 of two intersections of the great circles 20, 21 is shown and a direction 24 of a corresponding vanishing line is indicated.

In a procedure according to the present specification, the vanishing points on the unit sphere 23 are tracked over time using a Kalman filter. According to one realization, a distance between vanishing points corresponds to a length of a great circle segment on the unit sphere between the vanishing points and a statistical error is computed based on the distance.

The derived motion of the vanishing points corresponds to a change of camera orientation. According one embodiment, a change in camera orientation is compensated using the derived change of camera orientation. According to one aspect, small amplitude pitch and roll movements, which, among others, are caused by the car's suspension are tracked and compensated for. According to a further aspect, yaw movements are tracked, which are caused, among others, by the steering and a sliding motion of the wheels on a street surface.

According to one realization, the parallel lines of one vanishing point correspond to lateral boundaries of the street. According to another realization, the parallel lines correspond to demarcations on the street.

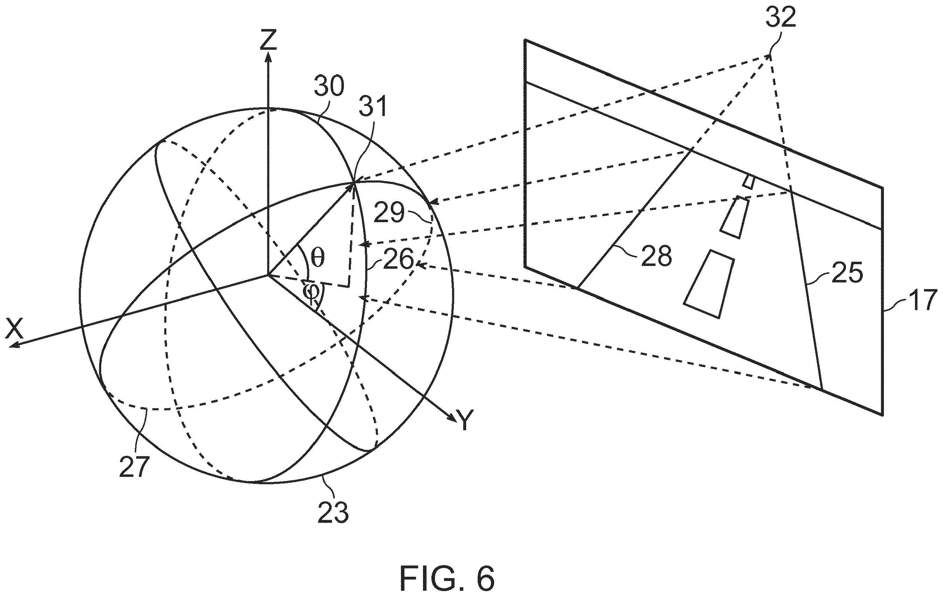

Fig. 6 shows a further example of a transformation of line segments to segments of great circles and the determination of a vanishing point. The image planes 17 of Figs. 5 and 6 represent a virtual image plane in computer memory in which lens distortions, which are present in the original sensor data of the camera sensors, have been reduced or removed by applying a distortion correction transformation.

A first line segment 25, which is the image of a first street border, is mapped to a segment 26 of a first great circle 27. A second line segment 28, which is the image of a second street border, is mapped to a segment 29 of a second great circle 30. The first and second great circles 27, 30 intersect at a vanishing point 31. This intersection point may be determined by computing an intersection of the great circles 27, 30 or also by extending the lines 25, 28, computing their intersection point 32 and mapping the intersection point 32 to the vanishing point 31.

In general, it is not known whether two given straight lines in a camera image correspond to parallel object lines and have a common vanishing point. Therefore, the computation of a vanishing point from two arbitrary line segments may also yield a "false vanishing point". According to the present specification, false vanishing points can be avoided or eliminated in various ways. For example, the image information can be analyzed and the line segments be identified as street border. Furthermore, in one embodiment a stored digital map may is used to determine that the street borders are straight and are suitable for the determination of a vanishing point.

Further methods to avoid false vanishing points comprise among others, the use of three-dimensional information from distance measurements or from stereoscopic images, inferences about an object's orientation based on a computational analysis of the camera image, and the computational determination of vanishing point clusters on the unit sphere.

According to a further embodiment, an artificial neural network is trained to detect parallel object lines, such as lines corresponding to street borders, street markings, guardrails, guide posts, lamp posts, horizontal and vertical features of buildings or other straight object features.

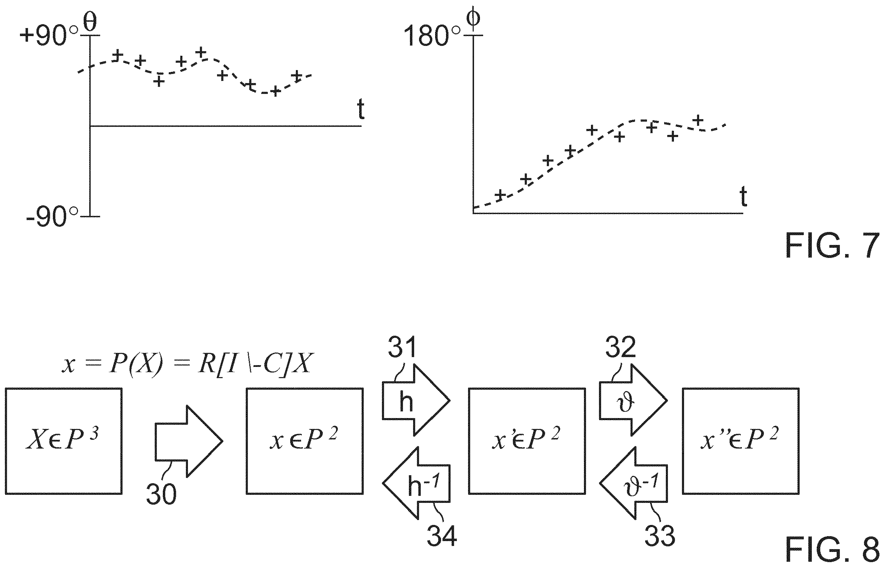

Fig. 7 shows spherical coordinates of a locus of a derived vanishing point over time. The spherical coordinates are chosen such that $\Phi$ corresponds to a yaw angle and $\theta$ corresponds to an elevation angle. Fig. 7 illustrates a situation in which a camera, which is fixed to the car, oscillates around an equilibrium elevation angle and turns together with the car by a yaw angle of about 90 degrees.

Yaw, pitch and roll angles, which are also known as "Tait-Bryan angles" may be obtained from the angles of the spherical coordinates $\theta$, $\Phi$ on the unit sphere by the transformation

$$\alpha = \tan^{-1}\left(\frac{z}{y}\right) = \tan^{-1}\left(\frac{\sin(\theta)}{\cos(\theta)\sin(\varphi)}\right)$$

$$\beta = \tan^{-1}\left(\frac{z}{x}\right) = \tan^{-1}\left(\frac{\sin(\theta)}{\cos(\theta)\cos(\varphi)}\right)$$

$$\gamma = \varphi$$

if $\Phi$ is measured in the x, y plane and $\Phi = 0$ corresponds to (x, y) = (1, 0).

Fig. 8 illustrates a computational model for deriving an image point x" from an object point or, conversely for deriving an object point from an image point.

In a first transformation step 30, an object point X is projected onto a view port plane. According to one realization, the transformation of step 30 is modelled as a rotation R and a translation C of the original object point X onto the view port plane.

In a second transformation step 31, a transformation h distorts the image according to properties of an imaging lens. The reverse transformation $h^{-1}$ according to step 34 is referred to as distortion correction transformation. The image correction according to step 34 reduces or removes lens distortions according to a pre-defined mathematical model of the lens distortions.

In one embodiment, in which a fish-eye objective is modeled, the distortion correction transformation comprises a transformation according to a polynomial fish-eye model such as, among others, an odd order polynomial model, a PFET (polynomial fish-eye transformation) model, or a division model. Other lens models for removing barrel-type distortions include, among others, the Kannala-Brandt model, and lens models according to Grossberg and Nayar and according to Gennery.

Furthermore, the distortion correction transformation may comprise a Hough transform. According to the Hough transform every point in an x-y plane is associated with a parameterized curve r(t) = x*cos(t) + y*sin(t). The parameters of the Hough transform, such as origin and orientation of the coordinate system, are determined by minimizing a distortion measure and/or by detecting lines in the picture and matching the lines to the parameterized curves. The distortion measure is related to a curvature of the image lines.

According to one embodiment, lines are detected by processing the image using an edge detector and detecting lines in the processed image. The processed image is then transformed into Hough space, which is spanned by the distance r and the angle t. A high intensity in Hough space corresponds to a well detected line.

In a third transformation step 32, a projection $\vartheta$ is applied which projects the point x' onto a corresponding image pixel x". The projection $\vartheta$ of step 32 may comprise irreversible components, such as an averaging step, which models the mapping of image points to a pixel, and reversible components. The inverse of the reversible portion of the transformation $\vartheta$ according to step 33 is referred to as reverse projection $\vartheta^{-1}$.

The arrows 33, 34 indicate the respective reverse transformation of the transformations 32 and 31. In a given realization, which may involve information loss such as image clipping and numerical errors, the transformations 31 and 32 are only approximately reversible.

By contrast, the projection according to step 30 is in general not reversible and the reconstruction of an object point X requires further assumptions, such as the recognition of an object and assumption about its orientation, and/or further measurements, such as distance measurements.

In order to remove distortions from an image of image pixels x", the reverse projection is applied in step 33 and the distortion correction is applied in step 34. According to the present specification, the resulting two dimensional image is then used to determine straight lines and their corresponding vanishing points, as shown in Fig. 5.

According to a particular realization, the function h, which models the lens, is used to extend a perspective projection according to a pinhole camera model. In projective or homogeneous coordinates, the pinhole camera model can be written as:

$$s\,m' = A\,[R|C]M',$$

or

$$s\begin{bmatrix} u \\ v \\ 1 \end{bmatrix} = \begin{bmatrix} f_x & 0 & c_x \\ 0 & f_y & c_y \\ 0 & 0 & 1 \end{bmatrix}\begin{bmatrix} r_{11} & r_{12} & r_{13} & c_1 \\ r_{21} & r_{22} & r_{23} & c_2 \\ r_{31} & r_{32} & r_{33} & c_3 \end{bmatrix}\begin{bmatrix} X \\ Y \\ Z \\ 1 \end{bmatrix}$$

Herein, [R|C] stands for a block matrix that is composed of the rotation matrix R and the translation vector C, (X, Y, Z) are the coordinates of a 3D point in the world coordinate space, (u, v) are the coordinates of the projection point in pixel units, A is a camera matrix, or a matrix of intrinsic parameters, (cx, cy) is a principal point that is usually at the image center, and fx, fy are the focal lengths expressed in pixel units.

The matrix A provides an example of the abovementioned instric transformation $\vartheta$. In general, the function $\vartheta$ is a generic intrinsic transformation $\vartheta = \vartheta$ (fx, 0, cx; 0, fy, cy).

For $z \neq 0$, the above transformation can be written in three dimensions as

$$\begin{bmatrix} x \\ y \\ z \end{bmatrix} = R \begin{bmatrix} X \\ Y \\ Z \end{bmatrix} + t$$

$$x' = \frac{x}{z}, \; y' = \frac{y}{z}$$

$$u = f_x * x' + c_x, v = f_y * y' + c_y .$$

The lens distortion function h can be integrated in this framework by inserting a transformation (x",y") = h(x',y') and computing u and v as a function of x" and y" instead.

An example of a function h is given by

$$\begin{bmatrix} x'' \\ y'' \end{bmatrix} = \begin{bmatrix} h_1(x') \\ h_2(y') \end{bmatrix} = \begin{bmatrix} \dfrac{\theta_d}{r} * x' \\ \dfrac{\theta_d}{r} * y' \end{bmatrix}$$

wherein

$$\theta_d = \theta(1 + k_1\theta^2 + k_2\theta^4 + k_3\theta^6 + k_4\theta^8), \;\; \theta = \operatorname{atan}(r), \; r^2 = a^2 + b^2, a = \frac{x}{z}, b = \frac{y}{z} .$$

In further embodiments, the polynomial in θ comprises also even powers of θ and/or a lower or higher order approximation.

According to the computational method of Fig. 8, a 3D world point Xc is projected onto the surface of a fisheye lens, which is represented by a polynomial function h. Thereby, the point Xs is projected into a point Xm in the sensor plane. The projection onto the sensor plane is affected by the lens distortion and this effect is modelled by the polynomial function h.

By using this camera model, each image point Xm can be mapped into a camera ray, which is a unit vector on the surface of a sphere with radius one. Computationally, the projection can be realized by normalization to a unit vector.

According to one embodiment, edges are determined in the distorted fisheye image and points of the detected edges are then projected into the camera rays using a camera module which implements the distortion correction. Each line is approximately mapped to a great circle or a segment of a great circle on the unit sphere. The vanishing points are determined by fitting circles. The calculations are simplified because the circles are great circles on the unit sphere, which have radius one.

According to one embodiment, the camera model is realized by generating a lookup-table for the mapping. The points on the unit sphere are easy to track as the motion is a circle in the surface of the sphere.

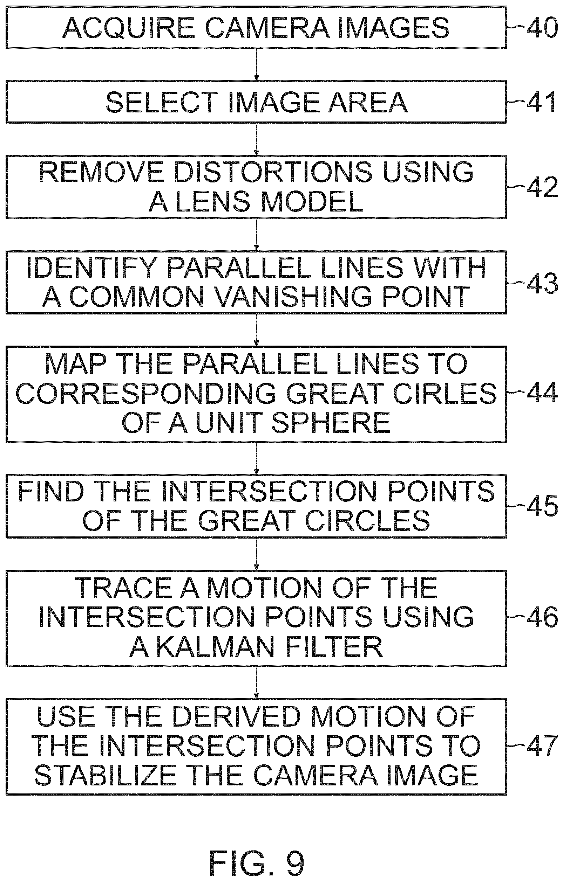

Fig. 9 shows a procedure for image stabilization according to the present specification.

In a step 40, one or more camera images are acquired from camera image sensors. In a step 41, a suitable image area is selected. For example, an image portion corresponding to a sky area may be clipped. In a step 42, image distortions are removed using an image transformation that is based on a lens model.

In a step 43, the corrected image is analysed computationally and lines that correspond to parallel object lines are detected. According to one embodiment, the lines are detected by and edge detection algorithm. According to further embodiments, the digitalized image is first transformed by a suitable integral transformation, such as Hough transformation or a Radon transformation, and the straight lines are detected as features of the transformed image.

In a step 44, the line segments are mapped to corresponding great circles on a unit sphere and, in a step 45, an intersection point of the unit circles is determined. In a step 46, a motion of the intersection point is determined.

According to the present specification a filter is used, in particular a Kalman filter, to interpolate and predict the motion of the vanishing point.

If there is more than one vanishing point and those vanishing points all correspond to stationary objects, the motions of the vanishing points are similar. According to one embodiment, the motions of the vanishing points are averaged to obtain an average motion. The resulting motion is used as an average of the camera motion. In a step 47, the derived motion of the vanishing points is used to stabilize the camera image.

The sequence of the steps in Fig. 9 are provided by way of example. The steps in a given realization may be different from the sequence of Fig. 9. For example, in a further embodiment straight lines are detected first and a vanishing point is detected only after mapping the lines to corresponding great circles, for example by attributing a vanishing point to a set of lines if the corresponding vanishing points of each pair of lines in the set of lines cluster on the unit sphere.

In this way, a vanishing point can be identified without prior identification of the line segments as street borders or as other objects with a known orientation. The clustering of vanishing points works especially well for objects with many horizontal and vertical lines, which are provided by many types of buildings and artificial structures.

**Reference number list**

| | |
|---|---|
| 11 | surround view system |
| 12 | front view camera |
| 13 | right side view camera |
| 14 | left side view camera |
| 15 | rear view camera |
| 16 | ground plane |
| 17 | view port plane |
| 18 | first line segment |
| 19 | second line segment |
| 20 | great circle |
| 21 | great circle |
| 22 | intersection point |
| 23 | unit sphere |
| 25 | first line segment |
| 26 | projected first line segment |
| 27 | great circle |
| 28 | second line segment |
| 29 | projected second line segment |
| 30 | great circle |
| 31 | projected vanishing point/intersection point |
| 32 | vanishing point (in the viewport plane) |
| 40-47 | method steps |

**Claims**

1. A method for image stabilization of an image sequence of one or more cameras of a car comprising, for each of the one or more cameras,
   recording images of the surroundings of the car from the camera (40),
   projecting image points of the recorded images to a unit sphere, wherein the projection comprises applying a lens distortion correction (42),
   calculating at least one vanishing point from the projected image points on the unit sphere (45),
   tracking a motion of the at least one vanishing point on the unit sphere (46),
   using the motion of at least one vanishing point to calculate a corrected projection to a ground plane (47), deriving a change in orientation of the one or more cameras from the tracked motion of the vanishing point, deriving a scaling of the recorded images using the derived change in orientation, wherein the tracking of the vanishing point comprises a tracking with a prediction filter.

2. The method of claim 1, comprising
   deriving a position deviation of the position of an image plane from the motion of the vanishing point and filtering the position deviation over time.

3. The method of claim 1, comprising
detecting edges in the recorded images and projecting image points of the detected edges onto the unit sphere.

4. The method according to one of the claims 1 to 3, wherein the distortion correction comprises applying a lens distortion correction which is based on a polynomial fish-eye model.

5. The method according to one of claim 1 to 4, wherein the calculation of the corrected projection to a ground plane comprises deriving a scaling of the recorded images using a filtered position.

6. The method according to one of the preceding claims comprising
detecting at least two corresponding straight lines in a corrected image (43),
deriving a position of a vanishing point of the at least two parallel lines on a unit sphere (45).

7. The method according to one of claims 1 to 6, wherein the image scaling comprises
deriving a true distance between the camera of the surround view system and a ground surface,
computing a scaling factor for an image pixel based on the derived true distance between the camera and the ground surface.

8. The method according to claim 6, wherein the vanishing point of the detected parallel lines is derived by projecting the detected lines on a unit sphere and determining the intersection of corresponding great circles.

9. The method according to one of the claims 1 to 8, wherein input values of the prediction further comprise an input from a motion sensor of the vehicle.

10. A computer program product for executing a method according to one of the claims 1 to 9.

11. An image correction system for a motor vehicle comprising a computation unit with an input connection for receiving consecutive camera images from one or more cameras (12, 13, 14, 15) of a car (10), the computation unit comprising an input connection for receiving images of the surroundings of the car from one of the one or more cameras (12, 13, 14, 15) of the car (10) and a processing unit that is operative to perform a method according to one of claims 1 to 9.

12. A motor vehicle with an image correction system according to claim 11, wherein one or more cameras (12, 13, 14, 15) of the motor vehicle are connected to the computation unit of the image correction system.

**Patentansprüche**

1. Verfahren zur Bildstabilisierung einer Bildsequenz einer oder mehrerer Kameras eines Autos, umfassend, für jede der einen oder mehreren Kameras,
das Aufzeichnen von Bildern der Umgebung des Autos aus der Kamera (40),
das Projizieren von Bildpunkten der aufgezeichneten Bilder auf eine Einheitssphäre, wobei die Projektion das Anwenden einer Linsenverzerrungskorrektur (42) umfasst,
das Berechnen mindestens eines Fluchtpunktes aus den projizierten Bildpunkten auf der Einheitssphäre (45),
das Verfolgen einer Bewegung des mindestens einen Fluchtpunktes auf der Einheitssphäre (46),
das Verwenden der Bewegung mindestens eines Fluchtpunktes zur Berechnung einer korrigierten Projektion auf eine horizontale Projektionsebene (47),
das Ableiten einer Änderung der Orientierung der einen oder mehreren Kameras aus der verfolgten Bewegung des Fluchtpunktes,
das Ableiten einer Skalierung der aufgezeichneten Bilder unter Verwendung der abgeleiteten Änderung der Orientierung, wobei die Verfolgung des Fluchtpunktes eine Verfolgung mit einem Prädiktionsfilter umfasst.

2. Verfahren nach Anspruch 1, umfassend
das Ableiten einer Positionsabweichung der Position einer Bildebene aus der Bewegung des Fluchtpunktes und zeitliches Filtern der Positionsabweichung.

3. Verfahren nach Anspruch 1, umfassend

das Detektieren von Kanten in den aufgezeichneten Bildern und Projizieren von Bildpunkten der detektierten Kanten auf die Einheitssphäre.

4. Verfahren nach einem der Ansprüche 1 bis 3, wobei die Verzerrungskorrektur das Anwenden einer Linsenverzerrungskorrektur umfasst, die auf einem polynomischen Fischaugenmodell basiert.

5. Verfahren nach einem der Ansprüche 1 bis 4, wobei die Berechnung der korrigierten Projektion auf eine horizontale Projektionsebene das Ableiten einer Skalierung der aufgezeichneten Bilder unter Verwendung einer gefilterten Position umfasst.

6. Verfahren nach einem der vorangehenden Ansprüche, umfassend das Detektieren von mindestens zwei entsprechenden Geraden in einem korrigierten Bild (43),
das Ableiten einer Position eines Fluchtpunktes der mindestens zwei parallelen Linien auf einer Einheitssphäre (45).

7. Verfahren nach einem der Ansprüche 1 bis 6, wobei die Bildskalierung umfasst
das Ableiten eines wahren Abstandes zwischen der Kamera des Rundumsichtsystems und einer Bodenoberfläche,
das Errechnen eines Skalierungsfaktors für ein Bildpixel auf der Grundlage des abgeleiteten wahren Abstandes zwischen der Kamera und der Bodenoberfläche.

8. Verfahren nach Anspruch 6, wobei der Fluchtpunkt der detektierten parallelen Linien durch Projizieren der detektierten Linien auf eine Einheitssphäre und Bestimmen des Schnittpunktes von entsprechenden Großkreisen abgeleitet wird.

9. Verfahren nach einem der Ansprüche 1 bis 8, wobei Eingabewerte der Prädiktion ferner eine Eingabe aus einem Bewegungssensor des Fahrzeuges umfassen.

10. Computerprogrammprodukt zur Ausführung eines Verfahrens nach einem der Ansprüche 1 bis 9.

11. Bildkorrektursystem für ein Kraftfahrzeug, umfassend eine Recheneinheit mit einer Eingabeverbindung zum Empfang von aufeinander folgenden Kamerabildern aus einer oder mehreren Kameras (12, 13, 14, 15) eines Autos (10),
wobei die Recheneinheit umfasst: eine Eingabeverbindung zum Empfang von Bildern der Umgebung des Autos aus einer der einen oder mehreren Kameras (12, 13, 14, 15) des Autos (10) und eine Verarbeitungseinheit, die so wirkt, dass sie ein Verfahren nach einem der Ansprüche 1 bis 9 durchführt.

12. Kraftfahrzeug mit einem Bildkorrektursystem nach Anspruch 11, wobei eine oder mehrere Kameras (12, 13, 14, 15) des Kraftfahrzeuges mit der Recheneinheit des Bildkorrektursystems verbunden ist/sind.

## Revendications

1. Procédé pour la stabilisation d'image d'une séquence d'images d'une ou plusieurs caméras d'une voiture comprenant, pour chacune des une ou plusieurs caméras,
enregistrer des images des environs de la voiture prises par la caméra (40),
projeter des points d'image des images enregistrées sur une sphère d'unités, la projection comprenant appliquer une correction de distorsion de lentille (42),
calculer au moins un point de fuite à partir des points d'image projetés sur la sphère d'unités (45),
suivre un mouvement de l'au moins un point de fuite sur la sphère d'unités (46),
utiliser le mouvement de l'au moins un point de fuite pour calculer une projection corrigée sur un plan de sol (47),
dériver une modification de l'orientation de l'une ou plusieurs caméras à partir du mouvement du point de fuite suivi,
dériver une mise à l'échelle des images enregistrées en utilisant la modification dérivée de l'orientation, le suivi du point de fuite comprenant un suivi avec un filtre de prédiction.

2. Procédé selon la revendication 1, comprenant
dériver une déviation de position de la position d'un plan d'image à partir du mouvement du point de fuite et filtrer la déviation de position dans le temps.

3. Procédé selon la revendication 1, comprenant
détecter des bords dans les images enregistrées et projeter des points d'image des bords détectés sur la sphère d'unités.

4.  Procédé selon l'une des revendications 1 à 3, la correction de distorsion comprenant appliquer une correction de distorsion de lentille qui est basée sur un modèle de grand angle polynomial.

5.  Procédé selon l'une des revendications 1 à 4, le calcul de la projection corrigée sur un plan de sol comprenant dériver une mise à l'échelle des images enregistrées en utilisant une position filtrée.

6.  Procédé selon l'une des revendications précédentes, comprenant détecter au moins deux lignes droites correspondantes dans une image corrigée (43),
    dériver une position d'un point de fuite des au moins deux lignes parallèles sur une sphère d'unités (45).

7.  Procédé selon l'une des revendications 1 à 6, la mise à l'échelle d'images comprenant
    dériver une distance réelle entre la caméra du système de vue panoramique et une surface de sol,
    calculer un facteur de mise à l'échelle pour un pixel d'image basé sur la distance réelle dérivée entre la caméra et la surface de sol.

8.  Procédé selon la revendication 6, le point de fuite des lignes parallèles détectées étant dérivé en projetant les lignes détectées sur une sphère d'unités et en déterminant l'intersection de grands cercles correspondants.

9.  Procédé selon l'une des revendications 1 à 8, des valeurs d'entrée de la prédiction comprenant en outre une entrée d'un capteur de mouvement du véhicule.

10. Produit de programme d'ordinateur pour exécuter un procédé selon l'une des revendications 1 à 9.

11. Système de correction d'images pour un véhicule à moteur comprenant une unité de calcul avec une connexion d'entrée pour recevoir des images de caméra consécutives de l'une ou plusieurs caméras (12, 13, 14, 15) d'une voiture (10), l'unité de calcul comprenant une connexion d'entrée pour recevoir des images des environs de la voiture par une des une ou plusieurs caméras (12, 13, 14, 15) de la voiture (10) et une unité de traitement qui fonctionne pour exécuter un procédé selon l'une des revendications 1 à 9.

12. Véhicule à moteur avec une correction d'images selon la revendication 11, une ou plusieurs caméras (12, 13, 14, 15) du véhicule à moteur étant connectées à l'unité de calcul du système de correction d'images.

FIG. 1

FIG. 2

FIG. 3

FIG. 4

FIG. 5

EP 3 259 732 B1

FIG. 6

EP 3 259 732 B1

FIG. 7

$$x = P(X) = R[I \,\backslash \text{-}C]X$$

$X \in P^3$   30   $x \in P^2$   31 $h$ / 34 $h^{-1}$   $x' \in P^2$   32 $\vartheta$ / 33 $\vartheta^{-1}$   $x'' \in P^2$

FIG. 8

```
┌─────────────────────────────────────┐
│      ACQUIRE CAMERA IMAGES           │──40
└─────────────────────────────────────┘
                 │
┌─────────────────────────────────────┐
│        SELECT IMAGE AREA             │──41
└─────────────────────────────────────┘
                 │
┌─────────────────────────────────────┐
│    REMOVE DISTORTIONS USING          │
│         A LENS MODEL                 │──42
└─────────────────────────────────────┘
                 │
┌─────────────────────────────────────┐
│  IDENTIFY PARALLEL LINES WITH        │
│   A COMMON VANISHING POINT           │──43
└─────────────────────────────────────┘
                 │
┌─────────────────────────────────────┐
│    MAP THE PARALLEL LINES TO         │
│ CORRESPONDING GREAT CIRLES           │──44
│      OF A UNIT SPHERE                │
└─────────────────────────────────────┘
                 │
┌─────────────────────────────────────┐
│   FIND THE INTERSECTION POINTS       │
│     OF THE GREAT CIRCLES             │──45
└─────────────────────────────────────┘
                 │
┌─────────────────────────────────────┐
│      TRACE A MOTION OF THE           │
│  INTERSECTION POINTS USING           │──46
│      A KALMAN FILTER                 │
└─────────────────────────────────────┘
                 │
┌─────────────────────────────────────┐
│   USE THE DERIVED MOTION OF          │
│  THE INTERSECTION POINTS TO          │──47
│  STABILIZE THE CAMERA IMAGE          │
└─────────────────────────────────────┘
```

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100295948 A

### Non-patent literature cited in the description

- **QIANG HE ; CHEE-HUNG HENRY CHU.** Vanishing Point Detection by Clustering on the Normalized Unit Sphere. *International Journal of Computer applications,* March 2013, vol. 65 (10), 22-28
- Video Stabilization for a Camcorder Mounted on a Moving Vehicle. **CHANG S.-L.** IEEE Transactions on Vehicular Technology. IEEE Service Center, vol. 53
- **XIANGHUA YING.** *Fisheye Lenses Calibration Using Straight-Line Spherical Perspective Projection Constraint*
- **STEPHEN T. BARNARD.** *Interpreting Perspective Images*
- **FILIPPO VELLA ; ALFIO CASTORINA ; MASSIMO MANCUSO ; GIUSEPPE MESSINA.** Digital Image Stabilization by Adaptive Block Motion Vectors Filtering. *IEEE Trans. Consumer Electronics,* 2002
- **JOSEPH GEUMLEK ; LING HAN MENG.** Contextual Point Matching for Video Stabilization: Sea Shell Sketch. University of California Irvine, 2012
- **YANHAO ZHANG ; HONGXUN YAO ; PENGFEI XU ; RONGRONG JI ; XIAOSHUAI SUN ; XIANMING LIU.** Video stabilization based on saliency driven SIFT matching and discriminative RANSAC. *Proceedings of the Third International Conference on Internet Multimedia Computing and Service,* 2011